Europäisches Patentamt

European Patent Office

Office européen des brevets

(11) Numéro de publication: **0 375 477 B1**

(12) **FASCICULE DE BREVET EUROPEEN**

(45) Date de publication de fascicule du brevet: **20.07.94**   (51) Int. Cl.5: **C01B 21/04**, C21D 1/76, B01D 53/22

(21) Numéro de dépôt: **89403159.0**

(22) Date de dépôt: **17.11.89**

(54) **Procédé d'élaboration d'une atmosphère de traitement thermique par séparation d'air par perméation.**

(30) Priorité: **24.11.88 FR 8815323**

(43) Date de publication de la demande:
**27.06.90 Bulletin 90/26**

(45) Mention de la délivrance du brevet:
**20.07.94 Bulletin 94/29**

(84) Etats contractants désignés:
**AT BE CH DE ES FR GB GR IT LI LU NL SE**

(56) Documents cités:
**EP-A- 0 213 991
US-A- 3 535 074**

**ADVANCED MATERIALS & PROCESSES vol.
134, no. 3, septembre 1988, METALS PARK,
OHIO, US pages 100 - 107; W.C.OUANTZ:
"STEALING NITROGEN FROM THE AIR"**

(73) Titulaire: **L'AIR LIOUIDE, SOCIETE ANONYME
POUR L'ETUDE ET L'EXPLOITATION DES
PROCEDES GEORGES CLAUDE
75, Ouai d'Orsay
F-75321 Paris Cédex 07(FR)**

(72) Inventeur: **Duchâteau, Eric
28, Rue Borgnis Desbordes
F-78000 Versailles(FR)**
Inventeur: **Oueille, Philippe
7, Rue Rieussec
F-78220 Viroflay(FR)**

(74) Mandataire: **Le Moenner, Gabriel et al
Societé l'Air Liquide
Chef du Service Brevets et Marques
75, Ouai d'Orsay
F-75321 Paris Cédex 07 (FR)**

EP 0 375 477 B1

**Description**

La présente invention concerne un procédé de traitement thermique de métaux dans un four, sous atmosphère de traitement thermique formée par apport d'un courant gazeux d'azote avec le cas échéant un ou plusieurs des constituants suivants : hydrogène, méthanol, hydrocarbure.

La composition de telles atmosphères de traitement thermique doit être substantiellement exempte d'oxygène et n'admet généralement la présence de vapeur d'eau qu'en des teneurs relativement faibles, d'ailleurs définies d'une application à l'autre. C'est la raison pour laquelle, dans la très grande majorité des applications de ce type, on part d'azote très pur produit par distillation cryogénique de l'air, dont la teneur résiduelle en oxygène ne dépasse pas 10 v.p.m (10 volumes par million). Cet azote dit cryogénique présente souvent un coût élevé de production, et de ce fait, dans cette technique de traitement thermique comme dans celles mettant en oeuvre de l'azote ou de l'oxygène, on s'est intéressé à d'autres sources industrielles, notamment la séparation de l'air par adsorption ou perméation sélectives. Ce dernier type de production est décrit dans le document "Advanced Materials and Processes Volume 134 n° 3 sept. 1988, pages 100 - 107 Metal Park OHIO U.S. WAYNE C. QUANTZ - Stealing nitrogen from the air" qui rappelle la production d'azote à 96, 5 % de pureté. Mais, dans ces cas, pour obtenir des coûts de production d' azote qui soient attractifs par rapport à l'azote cryogénique, on est amené à privilégier le rendement au détriment de la pureté, en sorte que l'azote compétitif en adsorption ou perméation contient usuellement une teneur résiduelle de 0,5 à 3 % d'oxygène en volume.

Cette relative impureté rend cependant très difficile l'utilisation de ce type d'azote pour produire une atmosphère de traitement thermique compatible avec de bons résultats. En pratique, on a proposé l'azote selon le procédé de perméation sélective uniquement pour la production d'atmosphère à partir d'un mélange d'azote et de méthanol, tel que celà est décrit dans l'article "Heat Treating Processes with nitrogen and Methanol based atmospheres - M. KOSTELITZ and al - "J. Heat Treating". Volume 2 Number 1-35, et dans les brevets français n° 79.055599, 82.09328, 82.12380 et 85.12379 au nom de la Demanderesse.

Bien que ce type d'atmosphère réalisée à partir d'azote relativement impur et de méthanol soit destiné habituellement au chauffage avant trempe, à la carbonitruration et à la cémentation d'acier, ce n'est en fait qu'en cémentation que l'utilisation d'azote de la technique d'adsorption ou de perméation a reçu une utilisatiuon industrielle, et cela du fait de la température élevée qu'elle exige de l'ordre de 900 ° C, température qui favorise la réaction de l'oxygène résiduel véhiculé par l'azote avec les espèces chimiques de type hydrocarbure ajoutées en addition dans l'atmosphère de base. On signale à ce sujet l'article "CARBURIZING with membrane $N_2$, - Process and Quality issues - P. MURZYN and Co. HEAT TREATING - March 1988".

D'autre part, il existe des systèmes de production d'azote de haute pureté autres que par voie cryogénique. Ces systèmes relativement complexes ont pour point de départ un générateur d'azote impur du type rappelé ci-dessus auquel est adjoint un ensemble connu sous l'appelation DEOXO qui permet d'atteindre une pureté résiduelle en oxygène inférieure à 10 vpm. Un tel procédé est décrit dans le document US 3.535.074 (F. NAKASHIMA).

Ces systémes ne sont pas répandus car cet azote de haute pureté conduit alors à un coût de production voisin de l'azote cryogénique, alors que les installations de production par adsorption ou perméation ne présentent pas les avantages de souplesse et de simplicité des installations de production d'azote cryogénique.

Ayant constaté cette situation, la Demanderesse est arrivée cependant à cette conclusion qu'on pouvait, par une série d'optimisations de production d'adapter l'azote industriel de perméation à un nombre d'applications de traitements thermiques sélectionnées de façon stricte et limitative.

L'invention a ainsi pour objet un procédé de traitement thermique de métaux dans un four, sous atmosphère de traitement thermique, ledit traitement thermique consistant en le recuit du cuivre, le brasage du cuivre, le recuit décarburant d'acier, le frittage du cuivre, de nickel ou de leurs alliages, le cas échéant avec du plomb ou le frittage d'alliage cuivre-étain, ce procédé étant caractérisé en ce qu'il comporte les étapes suivantes :

    a) on forme par séparation d'air par perméation sélective, un courant gazeux d'azote à teneur résiduel en oxygène comprise entre 0,5 et 3 %

    b) on adjoint au dit courant gazeux d'azote, formé à l'étape a), un débit d'hydrogène en vue d' éliminer par réaction catalytique l'essentiel de l'oxygène résiduel,

    c) on fait réagir catalytiquement l'hydrogène et l'oxygène résiduel pour former de la vapeur d'eau au moyen d'un catalyseur dont la mise en oeuvre est exempte d'apport thermique extérieur,

    d) on récupère un mélange gazeux comportant de l'azote, de l'oxygène résiduel en une teneur inférieure à 30 vpm par rapport à l'azote, de la vapeur d 'eau en une teneur comprise entre 1 et 6% par rapport à l'azote et, le cas échéant, de l'hydrogène excédentaire.

e) on introduit dans le four le mélange gazeux selon l'étape d) qui constitue ladite atmosphère de traitement thermique.

Le procédé selon l'invention est plus particulièrement adapté à l'une ou l'autre des applications suivantes :

1) l'adjonction de l'hydrogène s'effectue avec un débit excédentaire tel que le courant composite après réaction catalytique ait une teneur en hydrogène de 2 % à 5 % rapportés au débit total et on utilise ledit courant gazeux exclusivement pour former une atmosphère de recuit de cuivre ou de brasage de cuivre ;

2) l'adjonction de l'hydrogène s'effectue avec un débit excédentaire tel que le courant composite après réaction catalytique ait une teneur en hydrogène de 2 % à 75 % rapportés au débit total et on utilise ledit courant gazeux exclusivement pour former une atmosphère de recuit décarburant d'acier ;

3) l'adjonction d'hydrogène s'effectue à une valeur minimale juste suffisante pour assurer la transformation en vapeur d'eau et l'on élabore ladite atmosphère par introduction dudit courant gazeux et d'un courant d'ammoniac de 15 à 50 % rapportés au débit total et la protoxyde d'azote de 2 % à 5 %, rapportés au débit total, pour la nitruration d'acier.

4) l'adjonction de l'hydrogène s'effectue avec un débit excédentaire tel que le courant ainsi formé ait une teneur en hydrogène de 2 % à 15 % et on utilise ledit courant gazeux exclusivement pour former une atmosphère de frittage de cuivre, de nickel, de leurs alliages le cas échéant avec du plomb.

5) l'adjonction de l'hydrogène s'effectue avec un débit excédentaire tel que le courant aussi formé ait une teneur en hydrogène de 2 % à 15 % alors que le rapport hydrogène/vapeur d'eu reste supérieur à quatre et l'on utilise ledit courant gazeux pour fromer une atmosphère de frittage d'un alliage cuivre-étain.

Le compromis complexe qui est rappelé ci-dessus résulte d'une prise en compte de plusieurs facteurs. Ainsi, la teneur en oxygène du perméateur générateur d'azote brut est limitée à 3 %, celà permet de couvrir un certain nombre d'applications en traitement thermique qui admettent des teneurs en vapeur d'eau pouvant aller jusqu'à 6 %, comme c'est le cas du recuit ou brasage de cuivre, de recuit décarburant, de la nitruration d'acier, ou du frittage de certains métaux non ferreux. Si on propose de faire fonctionner le perméateur avec une teneur résiduelle en oxygène au moins égale à 0,5 %, c'est non seulement parce que vouloir accroître la qualité de séparation du perméateur conduirait à un prix de revient de l'azote incompatible avec les applications envisagées, mais également parce que ces applications exigent, ou du moins supportent sans risque des teneurs en vapeur d'eau au moins égales à 1 %.

Il faut également noter que, dans les applications proposées par l'invention, on ne peut profiter de la présence d'hydrogène dans l'atmosphère de traitement pour espèrer à coup sûr voir la teneur en oxygène réduite à cet endroit à une valeur très faible compatible avec l'application, car quand au cours du traitement, la température devient inférieure à 400-500°C la cinétique de la formation de vapeur d'eau à partir d'hydrogène et d'oxygène n'est pas suffisamment rapide et la teneur en oxygène résiduel est alors suffisante pour oxyder le métal notamment dans les zones de refroidissement des fours continus. Il est donc impératif que l'élimination de l'oxygène soit faite avant que le gaz de traitement ne soit introduit dans le four.

Mais non seulement la teneur en oxygène de l'azote brut ne doit pas dépasser la teneur de 3 % sous peine de devoir adjoindre de l'hydrogène en quantités économiquement inadmissibles, mais en outre la réaction catalytique de formation de vapeur d'eau doit être conduite avec une relative bonne efficacité, en sorte que la teneur résiduelle en oxygène ne dépasse pas 30 vpm. Il est cependant inutile et seulement très coûteux de mettre en oeuvre des réacteurs du type DEOXO à très hautes performances qui éliminent presque tout l'oxygène et en tout cas délivrent un gaz traité très pur. De tels réacteurs catalytiques sont d'exploitation coûteuse, car ils nécessitent un apport thermique extérieur non négligeable. C'est pourquoi la présente invention propose d'utiliser les réacteurs catalytiques à autosuffisance énergétique, comme certains sont déjà connus et utilisés dans d'autres applications, tels ceux mettant en oeuvre, à titre de catalyseur, du palladium sur support alumine. De tels catalyseurs fonctionnent sans apport thermique extérieur et permettent des performances correctes grâce auxquelles on peut, à coup sûr, éviter des teneurs résiduelles en oxygène supérieures à 30 vpm.

On va maintenant décrire plus en détails l'invention en examinant d'abord le générateur d'azote.

Ce générateur d'azote est du type à membrane sélective. On utilise une membrane semi-perméable qui peut être sous forme de fibres creuses pour séparer l'air compressé en azote et oxygène. Un gaz enrichi en oxygène et vapeur d'eau est évacué à l'extrémité du module de séparation, alors qu'un gaz sec enrichi en azote soit sur le côté du module. De tels générateurs sont bien connus et permettent de générer un gaz azote dont la pureté varie de 97 % à 99,5 % selon le réglage effectué.

On peut disposer également d'un analyseur de la teneur en oxygène de l'azote brut fonctionnant en continu et d'une cuve d'azote liquide pur permettant de garantir la sécurité d'approvisionnement et pour, si nécessaire, amender la qualité de l'azote de perméation.

La réaction catalytique nécessite l'intervention préalable d'un mélangeur d'azote brut et d'hydrogène, associé avantageusement à une capacité-tampon. Le catalyseur est choisi de façon à permettre une réaction immédiate et complète de l'oxygène et cela à température ambiante, avec une teneur résiduelle en oxygène inférieure à 30 vpm. Le catalyseur qui peut être utilisé est du type alumine avec 0,5 % de palladium qui peut traiter un débit horaire d'environ 5000 à 10.000 fois le volume de réacteur. Ce type de catalyseur ne nécessite aucun chauffage préalable du gaz et en outre n'implique pas une séquence de démarrage du réacteur avec rejet initial de gaz à l'air libre.

Ce réacteur catalytique peut être inséré dans une installation de différentes manières, par exemple :

- chaque four de traitement thermique comporte un pot catalytique dont le volume est adapté au débit du four. Ce montage permet de délivrer au four de l'azote hydrogéné avec une teneur en vapeur d'eau fonction de la teneur initiale en oxygène du générateur d'azote. Les réacteurs peuvent être alimentés à basse pression (inférieure à 1 bar relatif), ce qui entraîne des simplifications de réalisation.
- ou bien un seul et même réacteur catalytique alimente plusieurs fours et alors ce réacteur est alors alimenté en gaz pressurisé, généralement de 5 à 7 bars et le gaz sortant du réacteur désoxygéné contient une quantité de vapeur d'eau fonction du réglage du générateur.

L'adjonction d'hydrogène en excès par rapport à la stoechiométrie est alors fonction des traitements à réaliser.

On examine maintenant les applications concernées par l'invention.

## Recuit et brasage de cuivre

Le traitement est habituellement réalisé avec de l'azote cryogénique et de l'hydrogène (2 à 5 %). Avec le cuivre il est impératif d'avoir une teneur en oxygène résiduel très faible dans le gaz de traitement pour éviter les problèmes d'oxydation. En revanche, le contrôle de la vapeur d'eau n'est pas important. On remplace donc avantageusement l'azote cryogénique par un gaz de traitement à partir d'un générateur à perméation délivrant de l'azote brut auquel on ajoute de l'hydrogène tel que l'on ait 2 à 5 % d'hydrogène après réaction catalytique, ce mélange gazeux contenant de la vapeur d'eau dont la quantité est fonction de la teneur initiale en oxygène dans l'azote produit par le générateur.

## Recuits décarburants d'aciers

Ces récuits sont habituellement réalisés avec de l'azote cryogénique et de l'hydrogène. Une injection de vapeur d'eau à haute température permet d'augmenter le point de rosée et favorise la décarburation. Les teneurs en hydrogène et vapeur d'eau sont à ajuster de façon à décarburer les pièces sans les oxyder. L'azote cryogénique est avantageusement remplacé par un gaz de traitement généré à partir d'un générateur d'azote par perméation auquel on adjoint de l'hydrogène tel que l'on ait entre 2 et 75 % d'hydrogène après réaction catalytique, le mélange gazeux contenant de la vapeur d'eau d'eau dont la teneur est fonction de la teneur initiale en oxygène dans l'azote.

## Nitruration d'acier

Les traitements de nitruration des aciers peuvent être réalisés avec de l'azote, de l'ammoniac (15 à 50 %) et du protoxyde d'azote 2 à 5 %. Ces traitements sont principalement effectués dans des fours discontinus. L'injection d'un azote produit par un générateur à perméation risquerait de provoquer une oxydation des pièces au refroidissement, ceci peut être évité en ajoutant de l'hydrogène en quantité juste suffisante pour assurer la transformation catalytique de l'oxygène en vapeur d'eau.

## Frittage de cuivre, de Nickel et de leurs alliages le cas échéant avec du Plomb

On utilise habituellement de l'azote cryogénique avec de l'hydrogène pour fritter ces métaux. On peut lui substituer avantageusement un mélange d'azote de perméation et d'hydrogène tel que l'on ait 2 à 15 % d'hydrogène après réaction catalytique.

## Frittage d'alliages cuivre-étain

Dans le cas des alliages Cu-Sn, l'étain étant un élément assez oxydable il est nécessaire en plus de limiter la teneur en vapeur d'eau tel que le rapport

$$\frac{H_2(vpm)}{H_2O(vpm)}$$

soit supérieur à quatre.

## Revendications

1. Procédé de traitement thermique de métaux dans un four, sous atmosphère de traitement thermique, ledit traitement thermique consistant en le recuit du cuivre, le brasage du cuivre, le recuit décarburant d'acier, le frittage du cuivre, de nickel ou de leurs alliages, le cas échéant avec du plomb ou le frittage d'alliage cuivre-étain, ce procédé étant caractérisé en ce qu'il comporte les étapes suivantes :

    a) on forme par séparation d'air par perméation sélective, un courant gazeux d'azote à teneur résiduel en oxygène comprise entre 0,5 et 3 %,

    b) on adjoint au dit courant gazeux d'azote, formé à l'étape a), un débit d'hydrogène en vue d' éliminer par réaction catalytique l'essentiel de l'oxygène résiduel,

    c) on fait réagir catalytiquement l'hydrogène et l'oxygène résiduel pour former de la vapeur d'eau au moyen d'un catalyseur dont la mise en oeuvre est exempte d'apport thermique extérieur,

    d) on récupère un mélange gazeux comportant de l'azote, de l'oxygène résiduel en une teneur inférieure à 30 vpm par rapport à l'azote, de la vapeur d 'eau en une teneur comprise entre 1 et 6% par rapport à l'azote et, le cas échéant, de l'hydrogène excédentaire.

    e) on introduit dans le four le mélange gazeux selon l'étape d) qui constitue ladite atmosphère de traitement thermique.

2. Procédé selon la revendication 1 caractérisé en ce qu'à l'étape b), on adjoint un débit d'hydrogène tel que l'on récupère à l'étape d) un mélange gazeux dont la teneur en hydrogène est comprise entre 2 et 75 %, rapporté audit mélange gazeux.

3. Procédé selon l'une des revendications 1 et 2 caractérisé en ce que le mélange gazeux introduit dans le four comporte un hydrocarbure tel le méthane.

4. Procédé selon l'une des revendications 1 à 3 caractérisé en ce que ledit traitement thermique consiste en le recuit de cuivre ou le brasage de cuivre, l'atmosphère de traitement thermique comportant de 2 à 5 % d'hydrogène.

5. Procédé selon l'une des revendications 1 à 3 caractérisé en ce que ledit traitement thermique consiste en un recuit décarburant d'acier, l'atmosphère de traitement thermique comportant de 2 à 75 % d'hydrogène.

6. Procédé selon l'une des revendications 1 à 3 caractérisé en ce que ledit traitement thermique consiste en un frittage de cuivre, de nickel, ou de leurs alliages, l'atmopshère de traitement thermique comportant de 2 à 15 % d'hydrogène.

7. Procédé selon l'une des revendications 1 à 3 caractérisé en ce que ledit traitement thermique consiste en un frittage d'un alliage cuivre-étain, la teneur en hydrogène de l'atmosphère de traitement thermique étant comprise entre 2 % et 15 %.

8. Procédé selon la revendication 7 caractérisé en ce que le rapport d'hydrogène/vapeur d'eau est supérieur à 4.

9. Procédé selon l'une des revendications 1 à 3 caractérisé en ce que l'on introduit dans le four un mélange gazeux comprenant 15 à 50 % d'ammoniac et 2 à 5 % de protoxyde d'azote rapporté audit mélange gazeux.

10. Procédé selon la revendication 9 caractérisé en ce que mélange gazeux constitue une atmosphère de traitement thermique pour la nitruration d'acier.

## Claims

1. Process for the heat treatment of metals in a furnace, under a heat treatment atmosphere, the said heat treatment consisting of copper annealing, copper brazing, the annealing decarburization of steel, the sintering of copper, nickel or their alloys, as the case may be with lead, or the sintering of copper-tin alloy, this process being characterized in that it comprises the following stages :

    a) a gaseous current of nitrogen having a residual oxygen content of between 0.5 and 3 %, is produced by selective permeation air separation,

    b) a flow of hydrogen is added to the said gaseous current of nitrogen, formed in stage a), in order to remove the majority of the residual oxygen by catalytic reaction,

    c) the hydrogen and residual oxygen are made to react catalytically to form water vapour by means of a catalyst the use of which does not involve the addition of heat,

    d) a gaseous mixture is recovered containing nitrogen, residual oxygen at a level of less than 30 vpm with respect to nitrogen, water vapour at a level of between 1 and 6 % with respect to nitrogen and, as the case may be, excess hydrogen,

e) the gaseous mixture according to stage d), constituting the said heat treatment atmosphere, is introduced into the furnace.

2. Process according to Claim 1, characterized in that in stage b), a flow of hydrogen is added such that a gaseous mixture is recovered in stage d) in which the hydrogen concentration is between 2 and 75 %, based on the said gaseous mixture.

3. Process according to either of Claims 1 or 2 characterized in that the gaseous mixture introduced into the furnace contains a hydrocarbon such as methane.

4. Process according to one of Claims 1 to 3 characterized in that the said heat treatment consists of the annealing or brazing of copper, the said heat treatment atmosphere containing from 2 to 5 % of hydrogen.

5. Process according to one of Claims 1 to 3 characterized in that the said heat treatment consists of the annealing decarburization of steel, the said heat treatment atmosphere containing 2 to 75 % of hydrogen.

6. Process according to one of Claims 1 to 3, characterized in that the said heat treatment consists of sintering copper, nickel or their alloys, the heat treatment atmosphere containing 2 to 15 % hydrogen.

7. Process according to one of Claims 1 to 3, characterized in that the said heat treatment consists of sintering a copper-tin alloy, the hydrogen content of the heat treatment atmosphere being between 2 % and 15 %.

8. Process according to Claim 7, characterized in that the ratio of hydrogen/water vapour is greater than 4.

9. Process according to one of Claims 1 to 3, characterized in that a gaseous mixture is introduced into the furnace, comprising 15 to 50 % of ammonia and 2 to 5 % of nitrogen monoxide based on the said gaseous mixture.

10. Process according to Claim 9, characterized in that the gaseous mixture constitutes a heat treatment atmosphere for the nitriding of steel.

**Patentansprüche**

1. Verfahren zur Wärmebehandlung von Metallen in einem Ofen unter einer Wärmebehandlungsatmophäre, wobei die Wärmebehandlung im Glühen von Kupfer, im Löten von Kupfer, im Glühentkohlen von Kupfer, im Sintern von Kupfer, Nickel oder ihren Legierungen, ggf. mit Blei oder im Sintern von Kupfer-Zinnlegierungen besteht, wobei das Verfahren durch folgende Schritte gekennzeichnet ist:

a) Erzeugen eines Stickstoffgasstromes mit einem Sauerstoffrestgehalt zwischen 0,5 und 3% durch Lufttrennung durch selektive Permeation,

b) Zuführen einer Menge an Wasserstoff zum im Schritt a) erzeugten Stickstoffgasstrom, um den wesentlichen Teil des Sauerstoffrestes durch katalytische Reaktion zu entfernen,

c) katalytisches Reagieren des Wasserstoffes mit dem Sauerstoffrest zur Erzeugung von Wasserdampf mittels des Katalysators ohne Wärmezufuhr von außen,

d) Zurückgewinnen eines Gasgemisches, das Stickstoff, einen Sauerstoffrest mit einem Gehalt, bezogen auf den Stickstoff, von weniger als 30 vpm, Wasserdampf mit einem Gehalt, bezogen auf den Stickstoff, zwischen 1 und 6%, und ggf. überschüssigen Wasserstoff umfaßt,

e) Einleiten des die Wärmebehandlungsatmosphäre bildenden Gasgemisches nach Schritt d) in den Ofen.

2. Verfahren nach Anspruch 1, dadurch gekennzeichnet, daß im Schritt b) Wasserstoff in einer Menge zugeführt wird, wie sie im Schritt d) aus dem Gasgemisch zurückgewonnen wird, dessen Wasserstoffgehalt, bezogen auf das Gasgemisch, zwischen 2 und 75% beträgt.

3. Verfahren nach einem der Ansprüche 1 oder 2, dadurch gekennzeichnet, daß das in den Ofen eingeleitete Gasgemisch Kohlenwasserstoff, wie z.B. Methan, umfaßt.

4. Verfahren nach einem der Ansprüche 1 bis 3, dadurch gekennzeichnet, daß die Wärmebehandlung im Glühen von Kupfer oder im Löten von Kupfer besteht, wobei die Wärmebehandlungsatmosphäre 2 bis 5% Wasserstoff umfaßt.

5. Verfahren nach einem der Ansprüche 1 bis 3, dadurch gekennzeichnet, daß die Wärmebehandlung im Glühentkohlen von Stahl besteht, wobei die Wärmebehandlungsatmosphäre 2 bis 75% Wasserstoff umfaßt.

6.  Verfahren nach einem der Ansprüche 1 bis 3, dadurch gekennzeichnet, daß die Wärmebehandlung im Sintern von Kupfer, Nickel oder ihren Legierungen besteht, wobei die Wärmebehandlungsatmosphäre 2 bis 15% Wasserstoff umfaßt.

7.  Verfahren nach einem der Ansprüche 1 bis 3, dadurch gekennzeichnet, daß die Wärmebehandlung im Sintern von Kupfer-Zinn-Legierungen besteht, wobei der Wasserstoffgehalt der Wärmebehandlungsatmosphäre zwischen 2% und 15% beträgt.

8.  Verfahren nach Anspruch 7, dadurch gekennzeichnet, daß das Verhältnis von Wasserstoff zu Wasserdampf größer als 4 ist.

9.  Verfahren nach einem der Ansprüche 1 bis 3, dadurch gekennzeichnet, daß in den Ofen ein Gasgemisch eingeleitet wird, das, bezogen auf das Gasgemisch, 15 bis 50% Ammoniak und 2 bis 5% Stickstoffprotoxyd umfaßt.

10. Verfahren nach Anspruch 9, dadurch gekennzeichnet, daß das Gasgemisch eine Wärmebehandlungsatmosphäre zur Nitrierung von Stahl bildet.